(19) **Europäisches Patentamt / European Patent Office / Office européen des brevets**

(11) **EP 2 839 410 B1**

(12) **FASCICULE DE BREVET EUROPEEN**

(45) Date de publication et mention
de la délivrance du brevet:
**13.12.2017 Bulletin 2017/50**

(21) Numéro de dépôt: **13714965.4**

(22) Date de dépôt: **11.04.2013**

(51) Int Cl.:
***G06K 9/62*** *(2006.01)*

(86) Numéro de dépôt international:
**PCT/EP2013/057540**

(87) Numéro de publication internationale:
**WO 2013/156374 (24.10.2013 Gazette 2013/43)**

(54) **PROCÉDÉ DE RECONNAISSANCE D'UN CONTEXTE VISUEL D'UNE IMAGE ET DISPOSITIF CORRESPONDANT**

VERFAHREN ZUR ERKENNUNG EINES VISUELLEN KONTEXTES EINES BILDES UND ZUGEHÖRIGE VORRICHTUNG

METHOD FOR RECOGNIZING A VISUAL CONTEXT OF AN IMAGE AND CORRESPONDING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2012 FR 1253495**

(43) Date de publication de la demande:
**25.02.2015 Bulletin 2015/09**

(73) Titulaire: **Commissariat à l'Énergie Atomique et aux Énergies Alternatives 75015 Paris (FR)**

(72) Inventeurs:
- **SHABOU, Aymen
  75014 Paris (FR)**
- **LE BORGNE, Hervé
  75015 Paris (FR)**

(74) Mandataire: **HAMMES, Pierre
  Marks & Clerk France
  Immeuble Visium
  22, avenue Aristide Briand
  94117 Arcueil Cedex (FR)**

(56) Documents cités:

- **SHENGHUA GAO ET AL: "Local features are not lonely â Laplacian sparse coding for image classification", 2010 IEEE CONFERENCE ON COMPUTER VISION AND PATTERN RECOGNITION (CVPR), 13-18 JUNE 2010, SAN FRANCISCO, CA, USA, IEEE, PISCATAWAY, NJ, USA, 13 juin 2010 (2010-06-13), pages 3555-3561, XP031725772, ISBN: 978-1-4244-6984-0**
- **YANG YANG ET AL: "Tag localization with spatial correlations and joint group sparsity", COMPUTER VISION AND PATTERN RECOGNITION (CVPR), 2011 IEEE CONFERENCE ON, IEEE, 20 juin 2011 (2011-06-20), pages 881-888, XP032038001, DOI: 10.1109/CVPR.2011.5995499 ISBN: 978-1-4577-0394-2**
- **JINJUN WANG ET AL: "Locality-constrained Linear Coding for image classification", 2010 IEEE CONFERENCE ON COMPUTER VISION AND PATTERN RECOGNITION (CVPR), 13-18 JUNE 2010, SAN FRANCISCO, CA, USA, IEEE, PISCATAWAY, NJ, USA, 13 juin 2010 (2010-06-13), pages 3360-3367, XP031725847, ISBN: 978-1-4244-6984-0**
- **KAVUKCUOGLU K ET AL: "Learning invariant features through topographic filter maps", 2009 IEEE CONFERENCE ON COMPUTER VISION AND PATTERN RECOGNITION : CVPR 2009 ; MIAMI [BEACH], FLORIDA, USA, 20 - 25 JUNE 2009, IEEE, PISCATAWAY, NJ, 20 June 2009 (2009-06-20), pages 1605-1612, XP031607072, ISBN: 978-1-4244-3992-8**

EP 2 839 410 B1

**Description**

La présente invention concerne un procédé de reconnaissance du contexte visuel d'une image et un dispositif y correspondant. La présente invention s'inscrit dans le domaine de la détection et de la reconnaissance automatique d'objets dans des images ou des flux vidéo, dit domaine de la classification sémantique. Plus précisément, la présente invention s'inscrit dans le domaine dit de la classification supervisée. Elle s'applique notamment à la vidéosurveillance, à la vision artificielle par exemple dans des robots ou des véhicules, ainsi qu'à la recherche d'images.

Diverses applications requièrent que des objets puissent être identifiés dans des images ou dans des flux vidéo. La reconnaissance d'objets dans des images constitue une problématique majeure dans le domaine de la vision artificielle.

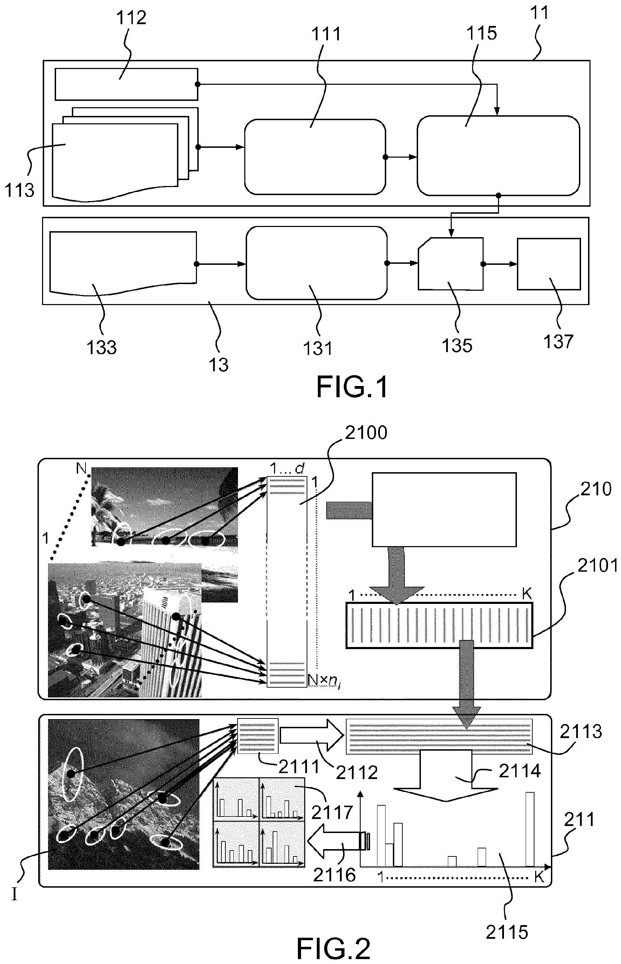

La classification supervisée est une technique particulièrement appropriée pour la reconnaissance d'objets dans des images. La classification supervisée implique deux phases principales : une première phase est réalisée hors-ligne, et constitue une phase d'apprentissage permettant d'établir un modèle ; une seconde phase, dite phase de test, est réalisée en ligne et permet de déterminer une prédiction d'une étiquette ou « label » d'une image de test. Ces phases sont explicitées plus en détails ci-après en référence à la figure 1.

Dans les applications visées par la présente invention, on cherche à reconnaître une catégorie d'un concept visuel, plutôt qu'une instance particulière. Par exemple, si le concept visuel est le concept « voiture », on cherche à reconnaître toute voiture, même si la voiture présente dans l'image testée n'est pas présente dans la base d'apprentissage.

Chacune des deux phases précitées comprend notamment une étape dite d'extraction de caractéristiques, communément désignée suivant la terminologie anglaise « feature extraction », visant à décrire une image, ou une partie d'une image, par un jeu de caractéristiques formant un vecteur de dimension déterminée. La qualité de l'extraction des caractéristiques repose sur la pertinence et la robustesse des informations à extraire des images, au sens des concepts visuels que l'on cherche à reconnaître. La robustesse est notamment à considérer au regard des variations des images en termes de point de vue, de luminosité, de rotation, translation et de zoom.

Des techniques d'extraction de caractéristiques connues impliquent une étape d'extraction de descripteurs locaux de l'image, pour reconstruire une signature finale, par une approche dite de « sac de mots visuels », communément désigné par le sigle BOV correspondant à la terminologie anglaise « Bag Of Visual terms » ou « Bag Of Visterms ». La figure 2 décrite en détails ci-après illustre le principe de fonctionnement d'une étape d'extraction de caractéristiques. Typiquement, un ou une pluralité de descripteurs locaux sont extraits de l'image considérée, à partir de pixels ou de patchs denses dans l'image, ou plus généralement de sites dans l'image. En d'autres termes, des descripteurs locaux sont associés à autant de patchs, qui peuvent notamment être définis par leur localisation ou localité, par exemple par des coordonnées (x,y) dans un repère cartésien dans lequel est également défini le domaine de l'image considérée, un patch pouvant se limiter à un pixel, ou consister en un bloc d'une pluralité de pixels. Pour la suite on se référera à la localisation de descripteurs locaux pour désigner la localisation des sites auxquels ils sont associés, et d'une manière similaire on pourra qualifier des descripteurs locaux de voisins spatialement dans une image, lorsque les sites auxquels ils sont associés sont spatialement voisins dans l'image. Les descripteurs locaux sont alors recodés lors d'une étape de codage ou « coding » dans un espace des caractéristiques ou « feature space » selon la terminologie anglaise, en fonction d'un dictionnaire de référence, communément désigné par le terme anglais « codebook ». Les vecteurs recodés sont alors agrégés, lors d'une étape d'agrégation ou de « pooling » en un unique vecteur formant signature. Ces étapes peuvent être répétées pour plusieurs parties de l'image considérée, puis les signatures concaténées, par exemple conformément à un schéma de pyramide spatiale, désigné par l'acronyme SPM désignant la terminologie anglaise « Spatial Pyramid Matching », consistant à découper l'image considérée en sous-blocs, par exemple des carrés de 2x2 ou 4x4 blocs, ou des rectangles de 1x3 blocs, etc. , à déterminer la signature pour chaque sous-bloc puis à concaténer toutes les signatures déterminées en les pondérant par un facteur dépendant de l'échelle des découpages en sous-blocs. Une technique de type SPM est par exemple décrite dans la publication de S. Lazebnik, C. Schmid et J. Ponce « Beyond bags of features : Spatial pyramid matching for recognizing natural scene catégories » In CVPR, 2006.

Différentes techniques connues forment la base des étapes d'agrégation et de codage précitées. L'étape de codage peut notamment se fonder sur une technique dite de « codage dur », communément désignée suivant la terminologie anglaise « Hard Coding » ou suivant l'acronyme correspondant HC. Des techniques de codage dur sont par exemple décrites dans la publication de S. Lazebnik, C. Schmid et J. Ponce « Beyond bags of features : Spatial pyramid matching for recognizing natural scene catégories » précitée, ou encore dans la publication de J. Sivic et A. Zisserman « Video google : a text retrieval approach to object matching in videos » In ICCV, 2003. Selon une technique de codage dur, un descripteur local est recodé en un vecteur comportant un unique « 1 » sur la dimension correspondant à l'indice de son plus proche voisin dans le dictionnaire de référence, et une pluralité de « 0 » ailleurs. Associée à une étape d'agrégation fondée sur la détermination d'une moyenne, une étape de codage par codage dur conduit ainsi à la réalisation d'un histogramme d'occurrence des mots visuels du dictionnaire de référence les plus présents, un mot visuel du dictionnaire de référence étant considéré comme présent lorsqu'il est le plus proche d'un descripteur local de l'image considérée.

L'étape de codage peut également se fonder sur une technique dite de « codage doux », communément désignée suivant la terminologie anglaise « Soft Coding » ou suivant l'acronyme correspondant SC. Une technique de codage doux est notamment décrite dans la publication de J. Van Gemert, C. Veenman, A. Smeulders et J. Geusebroek « Visual word ambiguity » - PAMI, 2009. Suivant la technique de codage doux, un descripteur local est recodé suivant sa similarité à chacun des mots visuels du dictionnaire de référence. La similarité est par exemple calculée comme une fonction décroissante de la distance, typiquement une exponentielle de l'opposé de la distance.

L'étape de codage peut également se fonder sur une technique dite de « codage linéaire localement contraint », communément désignée suivant la terminologie anglaise « Locally constrained Linear Coding » ou suivant l'acronyme correspondant LLC. Des techniques de type LLC sont notamment décrites dans la publication de S. Gao, I. Tsang, L. Chia et P. Zhao, « Local features are not lonely - Laplacian sparse coding for image classification » In CVPR, 2011, dans la publication de L.Liu, L. Wang and X. Liu « In defense of soft-assignment coding » in CVPR, 2011, ou encore dans la publication de J. Yang, K. Yu, Y. Gong et T. Huang « Linear spatial pyramid matching using sparse coding for image classification » in CVPR, 2009. Le principe de cette technique consiste à restreindre le codage de type doux aux plus proches voisins des descripteurs dans l'espace des caractéristiques, par exemple de 5 à 20 plus proches voisins du dictionnaire de référence. De la sorte, le bruit de codage peut être réduit de manière significative.

L'étape de codage peut également se fonder sur une technique dite de « codage saillant localement contraint », communément désignée suivant la terminologie anglaise « Locally constrained Salient Coding » où chaque descripteur n'est codé que sur son plus proche voisin en lui associant une réponse, dite de pertinence « saliency », qui dépend des distances relatives des plus proches voisins au descripteur. En d'autres termes, plus la distance du plus proche voisin au descripteur est faible par rapport aux distances des autres proches voisins à ce même descripteur, plus la pertinence est importante. Une technique de type « saliency coding » est notamment décrite dans la publication de Y. Huang, K. Huang, Y. Yu, and T. Tan. « Salient coding for image classification », In CVPR, 2011.

Un inconvénient des procédés de reconnaissance de contexte visuel connus, mettant en oeuvre des étapes d'extraction de caractéristiques connues, est lié au fait que bien que des descripteurs locaux soient proches dans une image, et aient par conséquent probablement des caractéristiques semblables, leur encodage dans l'espace des caractéristiques par l'étape de codage peut conduire à une grande variabilité. Il en résulte que de larges zones relativement homogènes d'une image peuvent être codées très différemment.

Un but de la présente invention est de pallier au moins les inconvénients précités, en proposant un procédé de reconnaissance d'un contexte visuel d'une image fondé sur la technique des sacs de mots, assurant un lissage des codes des descripteurs locaux en fonction de leur proximité spatiale mutuelle et de leur similarité.

Il est notamment proposé à cette fin par la présente invention d'inclure une nouvelle étape de codage dans un procédé de reconnaissance, ou bien des moyens appropriés pour la mettre en oeuvre dans un dispositif de reconnaissance de contexte visuel, mettant par exemple en oeuvre un codage prenant en compte le contexte spatial des descripteurs locaux, permettant de choisir les dimensions non nulles des vecteurs recodés et précédant une technique de codage en elle-même connue.

En considérant les descripteurs locaux comme étant distribués selon une structure prédéterminée, par exemple une grille régulière, la présente invention propose que la prise en compte du contexte spatial des descripteurs locaux soit réalisée au moyen d'une fonction objective prenant en compte à la fois la contrainte de localité dans le domaine spatial, c'est-à-dire que deux descripteurs locaux proches sur la grille sont candidats pour être codés identiquement selon la similarité entre ceux-ci, ou encore selon la similarité des mots visuels du dictionnaire de référence auxquels des descripteurs locaux voisins sont associés, et un codage local dans l'espace des caractéristiques.

Un autre avantage de l'invention est qu'elle peut se fonder indifféremment sur une des techniques de codage en elles-mêmes connues, dont des exemples sont présentés précédemment.

A cet effet, l'invention a pour objet un procédé de reconnaissance d'un contexte visuel selon la revendication 1. Selon un mode de réalisation de l'invention, ledit second terme peut être pondéré par un paramètre de régularisation global.

Selon un mode de réalisation de l'invention, ladite fonction objective peut être définie par la relation (1) présentée ci-après.

Selon un mode de réalisation de l'invention, la minimisation de la fonction objective peut être opérée par un algorithme d'optimisation.

Selon un mode de réalisation de l'invention, ledit algorithme d'optimisation peut se fonder sur une approche de type par coupe de graphes.

Un procédé de reconnaissance selon l'un des modes de réalisation de l'invention peut s'appliquer à la reconnaissance d'un contexte visuel dans un flux vidéo formé par une pluralité d'images, au moins une image parmi la pluralité d'images faisant l'objet d'un procédé de reconnaissance d'un contexte visuel dans une image suivant l'un des modes de réalisation de l'invention.

La présente invention a également pour objet un système de classification supervisée comprenant au moins une phase d'apprentissage réalisée hors-ligne, et une phase de test réalisée en ligne, la phase d'apprentissage et la phase de test comprenant chacune au moins une étape d'extraction de caractéristiques telle que définie dans un procédé de reconnaissance selon l'un quelconque des modes de réalisation de l'invention.

La présente invention a également pour objet un dispositif de reconnaissance d'un contexte visuel dans une image comprenant des moyens adaptés pour la mise en oeuvre d'un procédé de reconnaissance selon l'un quelconque des modes de réalisation de l'invention.

La présente invention a également pour objet un programme d'ordinateur comportant des instructions pour mettre en oeuvre un procédé selon l'un des modes de réalisation de l'invention.

D'autres caractéristiques et avantages de l'invention apparaîtront à la lecture de la description, donnée à titre d'exemple, faite en regard des dessins annexés qui représentent :

- la figure 1, un diagramme illustrant la technique de classification supervisée ;
- la figure 2, un diagramme illustrant le principe de la technique d'extraction de caractéristiques d'une image selon l'approche BOV;
- les figures 3a et 3b, un schéma illustrant de manière synoptique le principe d'association de descripteurs locaux à des mots visuels d'un dictionnaire de référence, selon un exemple de réalisation de la présente invention ;
- la figure 4, un schéma illustrant de manière synoptique un dispositif de reconnaissance de contexte visuel selon un exemple de réalisation de la présente invention.

La figure 1 présente un diagramme illustrant la technique de classification supervisée, introduite précédemment.

Un système de classification supervisée comprend notamment une phase d'apprentissage 11 réalisée hors ligne, et une phase de test 13 réalisée en ligne.

La phase d'apprentissage 11 et la phase de test 13 comprennent chacune une étape d'extraction de caractéristiques 111, 131 permettant de décrire une image par un vecteur de dimension déterminée. L'étape d'apprentissage 11 consiste à extraire les caractéristiques sur un grand nombre d'images d'apprentissage 113 ; une série de signatures et les étiquettes 112 correspondantes alimentent un module d'apprentissage 115, qui produit alors un modèle 135.

L'étape de test 13 consiste à décrire, au moyen de l'étape d'extraction de caractéristiques 131, une image dite image de test 133 par un vecteur de même nature que lors de la phase d'apprentissage 11. Ce vecteur est appliqué en entrée du modèle 135 précité. Le modèle 135 produit en sa sortie une prédiction 137 de l'étiquette de l'image de test 133. La prédiction associe l'étiquette (ou les étiquettes) la (ou les) plus pertinente(s) à l'image test parmi l'ensemble des étiquettes possibles.

Cette pertinence est calculée au moyen d'une fonction de décision associée au modèle d'apprentissage appris sur la base d'apprentissage dépendant de l'algorithme d'apprentissage utilisé.

L'étiquette d'une image indique son degré d'appartenance à chacun des concepts visuels considérés. Par exemple, si trois classes sont considérées, par exemple les classes « plage », « ville » et « montagne », l'étiquette est un vecteur à trois dimensions dont chaque composante est un nombre réel. Par exemple, chaque composante peut être un nombre réel compris entre 0 si l'image ne contient pas le concept, et 1 si l'image contient le concept de manière certaine.

La technique d'apprentissage peut être basée sur une technique en elle-même connue, telle que la technique des séparateurs à vaste marge, communément désignée par le sigle SVM correspondant à la terminologie anglaise « Support Vector Machine », sur une technique dite de « boosting », ou encore sur une technique du type désigné par le sigle MKL correspondant à la terminologie anglaise « Multiple Kernel Learning ».

La présente invention se rapporte plus particulièrement à l'étape d'extraction de caractéristiques 111, 131, et s'intègre donc dans un procédé de reconnaissance de contexte visuel comprenant en outre notamment une étape d'acquisition d'une image ou d'un flux vidéo, une éventuelle étape de découpage de l'image en sous-images, la prédiction de l'étiquette pour l'image de test ou une sous-image.

La figure 2 présente un diagramme illustrant le principe de la technique d'extraction de caractéristiques d'une image.

Une étape d'extraction de caractéristiques 211 d'une image I comprend une étape d'extraction d'une pluralité n de descripteurs locaux 2111 pour une pluralité de patchs de l'image I. Les descripteurs locaux 2111 sont des vecteurs d'une taille d. L'extraction de descripteurs locaux peut être réalisée suivant différentes techniques en elles-mêmes connues. Par exemple, suivant la transformée de caractéristiques visuelles invariantes à l'échelle, communément désignée par la terminologie anglaise « Scale-Invariant Feature Transform » ou par le sigle « SIFT » correspondant, ou bien suivant la technique des histogrammes de gradients, communément désignée par le sigle HOG correspondant à la terminologie anglaise « Histograms Of Gradients », ou encore suivant la technique des caractéristiques robustes accélérées, communément désignée suivant le sigle SURF issu de la terminologie anglaise « Speeded Up Robust Features ».

Un descripteur local implique une transformation mathématique ou statistique à partir d'au moins un pixel d'une image. On trouvera des exemples, bien connus de l'Homme du métier, de descripteurs locaux dans les articles « Mikolajczyk, K.; Schmid, C., "A performance evaluation of local descriptors," Pattern Analysis and Machine Intelligence, IEEE Transactions on, vol.27, no.10, pp.1615,1630, Oct. 2005. doi: 10.1109/TPAMI.2005.188 » ou aux paragraphes « localisation des caractéristiques » et « caractéristiques locales » de l'article http://fr.wikipedia.org/wiki/Extraction de caract%C3%A9ristique en vision p ar ordinateur

En particulier, un descripteur local n'est pas une simple région d'image obtenue par segmentation.

Les n descripteurs locaux 2111 sont recodés dans l'espace des caractéristiques lors d'une étape de codage 2112 pour former une matrice de codage 2113, en fonction d'un dictionnaire de référence 2101 et d'au moins un critère de similarité, le dictionnaire de référence 2101 étant construit lors d'une phase d'élaboration 210 du dictionnaire de référence décrite en détails ci-après. Le dictionnaire de référence 2101 comprend une pluralité K de mots visuels de taille d, et sa taille est donc égale à dxK (d lignes et K colonnes). Les vecteurs recodés formant la matrice de codage 2113 sont alors agrégés lors d'une étape d'agrégation 2114 ou de « pooling » pour former un vecteur unique ou signature 2115 de longueur K. Le processus défini par les étapes de codage 2112 et d'agrégation 2114 est éventuellement réitéré pour plusieurs parties de l'image I ou sous-images, puis les signatures concaténées lors d'une étape de concaténation 2116 pour former une signature concaténée 2117 suivant un schéma de type pyramide spatiale.

Le dictionnaire de référence 2101 est établi lors de la phase d'élaboration 210 à partir d'une grande collection de descripteurs locaux issus d'une pluralité d'images 1 à N. Pour un nombre $n_i$ de descripteurs locaux par image 1 à N, une matrice 2100 de $Nxn_i$ descripteurs locaux de taille d est construite. Le dictionnaire de référence 2101 peut alors par exemple être construit à partir de la matrice 2100 en employant une classification non supervisée, désignée par le terme anglais « clustering », par exemple suivant l'algorithme des K-moyennes ou « K-means » selon la terminologie anglaise, permettant de partitionner les $Nxn_i$ descripteurs locaux dans une pluralité k d'ensembles afin de minimiser l'erreur de reconstruction des descripteurs par le centroïde à l'intérieur de chaque partition. Il est également possible de recourir à d'autres méthodes d'apprentissage du dictionnaire de référence, telles que par exemple le tirage aléatoire des descripteurs locaux ou le codage parcimonieux.

L'étape d'agrégation 2114 peut par exemple consister à réaliser une moyenne, ou bien l'agrégation peut s'effectuer selon le maximum par colonne de la matrice de codage 2113 de dimension nxK.

L'étape de codage 2112 peut en partie se baser sur une technique de codage telle que la technique du codage dur, ou bien du codage doux, ou bien de codage linéaire localement contraint ou LLC, ou encore de codage saillant LSC, ces techniques en elles-mêmes connues étant introduites précédemment.

A partir d'une hypothèse Markovienne pour une image donnée I, il est possible d'affirmer que des patchs voisins dans une zone unie ou lisse de l'image doivent être codés sur des bases similaires à partir du dictionnaire de référence 2101. En revanche, pour des patchs voisins dans une zone de l'image I présentant des discontinuités, les bases correspondantes dans le dictionnaire de référence 2101 peuvent varier, en fonction des informations des descripteurs locaux correspondants.

Soit $P = \{1;2;...; N_l\}$ l'ensemble des indices des pixels ou des patchs denses, ou plus généralement des sites, dans l'image I. Un ensemble de descripteurs locaux $X = \left\{ x_p ; x_p \in \Re^d ; p \in \mathrm{P} \right\}$ est extrait de l'image I pour tous les sites considérés.

Le dictionnaire de référence 2101 peut être noté $B = \left\{ b_i ; b_i \in \Re^K ; i \in \aleph \right\}$. Il est considéré que chaque descripteur local est attribué à un sous-ensemble de vecteurs locaux de référence ou « mots visuels » appartenant au dictionnaire de référence 2101.

Par souci de simplicité de la notation, il est possible de noter $Y = \left\{ y_p ; y_p \in \aleph^m ; p \in \mathrm{P} \right\}$ l'ensemble des indices des vecteurs locaux de référence auxquels les descripteurs locaux $x_p$ sont associés.

Dans le cas exemplifié où l'étape de codage se fonde en partie sur un codage linéaire localement contraint ou LLC, chaque vecteur $y_p$ représente les indices des m mots visuels les plus proches de $x_p$.

L'ensemble des vecteurs locaux de référence relatifs aux indices dans le vecteur $y_p$ peut être noté $\hat{B}_p = \{\hat{b}_{p,i}; i \in \{1;...;m\}\}$ et il est possible de définir l'ensemble $\hat{B}$ des ensembles $\hat{B}_p$, soit : $\hat{B} = \{\hat{B}_p; p \in P\}$.

Ainsi, selon une hypothèse dite de localité, chaque descripteur local peut être associé à des mots visuels compris dans l'ensemble des k mots visuels les plus proches du dictionnaire de référence 2101, k étant supérieur à m. Le nombre k restreint la recherche des m vecteurs optimaux du dictionnaire de référence à un voisinage local dans l'espace des descripteurs locaux afin de tenir compte de l'hypothèse de la localité dans l'espace des descripteurs locaux et d'accélérer le processus de recherche de la base optimale pour un descripteur local donné.

En d'autres termes, k désigne le nombre maximum des vecteurs de la base dont m vecteurs seront considérés comme les optimaux pour coder un descripteur local donné.

La valeur de k peut être choisie suffisamment grande de manière à considérer un voisinage relativement large dans l'espace des caractéristiques.

L'ensemble des indices des k mots visuels les plus proches du descripteur local $x_p$ peut être noté :

$$L_p = \left\{ l_p^1 ; l_p^2 ; ... ; l_p^k \right\}$$

Cet ensemble peut être désigné ensemble des étiquettes qu'un site p peut possiblement revêtir.

Le problème que la présente invention propose de résoudre peut être assimilé à un problème d'étiquetage consistant à déterminer la référence ou « association » optimale pour chaque descripteur local, parmi les k mots visuels les plus proches, suivant l'hypothèse spatiale contextuelle.

Il est possible à cette fin d'introduire une fonction objective, ou « fonction d'énergie » E(Y) permettant de formaliser ce problème, se présentant comme une somme d'un premier terme exprimant l'association d'un descripteur local donné à des mots visuels proches du dictionnaire de référence, et d'un second terme exprimant l'association de mots visuels du dictionnaire de référence similaires pour des descripteurs locaux proches spatialement dans l'image I, et présentant entre eux une similarité suffisante.

Avantageusement un paramètre global de régularisation permet de pondérer le second terme par rapport au premier terme, de manière à permettre un ajustement du lissage permis par la présente invention.

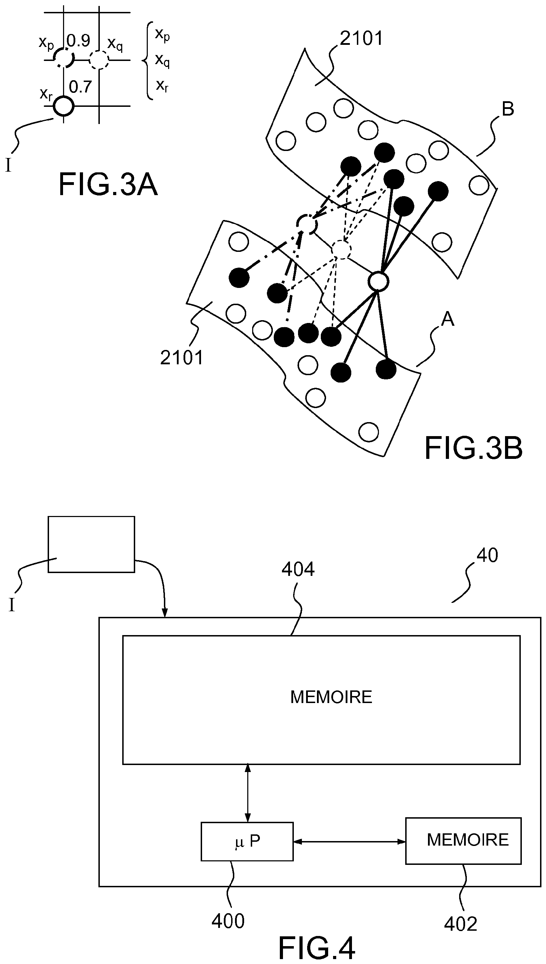

Les figures 3a et 3b illustrent de manière synoptique le principe d'association de descripteurs locaux à des mots visuels du dictionnaire de référence, selon un exemple de réalisation de la présente invention.

En référence à la figure 3a, trois descripteurs locaux $x_p$, $x_q$ et $x_r$ peuvent être extraits de trois sites d'une image I. L'image I peut être subdivisée en une grille régulière, dans l'exemple illustré par la figure. Les descripteurs locaux $x_p$, $x_q$ et $x_r$ sont voisins au sens de la grille régulière. Le premier descripteur local $x_p$ présente un premier taux de similarité, égal à 0,9 dans l'exemple illustré par la figure, avec le deuxième descripteur local $x_q$, et un deuxième taux de similarité, égal à 0,7 dans l'exemple illustré par la figure, avec le troisième descripteur local $x_r$.

Il est à observer que l'usage d'une grille régulière ne constitue qu'un exemple non-limitatif de la présente invention. D'autres techniques de segmentation de l'image peuvent être utilisées. Par exemple des traitements préalables peuvent permettre d'élire des sites disposés en des points particuliers de l'image en fonction de différents critères tels que des gradients de contraste, etc.

Maintenant en référence à la figure 3b, les descripteurs locaux $x_p$, $x_q$ et $x_r$ sont associés, lors de l'étape de codage, à des mots visuels du dictionnaire de référence 2101. Le même dictionnaire de référence est illustré sur la figure par deux références A et B : la première référence A illustre un principe d'association selon une technique de codage connue de la technique, par exemple une des techniques de codage connues introduites précédemment ; la seconde référence B illustre un principe d'association selon un exemple de réalisation de la présente invention.

Selon une des techniques de codage connues de l'état de la technique, les trois descripteurs locaux $x_p$, $x_q$ et $x_r$ sont associés chacun à une pluralité de voisins les plus proches parmi les mots visuels du dictionnaire de référence 2101, au nombre de trois dans l'exemple illustré par la figure. L'association d'un descripteur local à des mots visuels du dictionnaire de référence 2101 est réalisé en fonction de critères de similarité, c'est-à-dire de distance. Les trois descripteurs locaux $x_p$, $x_q$ et $x_r$ sont ainsi associés à des mots visuels du dictionnaire de référence sans considération de la proximité spatiale dans l'image I des sites dont ils sont issus. Ainsi, des descripteurs locaux voisins spatialement dans l'image et similaires, tels que les premier et deuxième descripteurs locaux $x_p$, $x_q$, peuvent se voir associés à des mots visuels différents du dictionnaire de référence 2101. Dans l'exemple illustré par la figure, le premier descripteur local $x_p$ et le deuxième descripteur local $x_q$ ne partagent qu'un seul mot visuel du dictionnaire de référence 2101, en dépit de leur voisinage spatial et de leur similarité.

Considérant maintenant la seconde référence B dans la figure 3b, le principe d'association selon la présente invention assure que des descripteurs locaux issus de sites spatialement voisins de l'image I, et présentant un taux de similarité suffisant, soient associés à des mots visuels identiques du dictionnaire de référence 2101. Dans l'exemple illustré par la figure 3b, le premier descripteur local $x_p$ et le deuxième descripteur local $x_q$ partagent ainsi trois mots visuels communs du dictionnaire de référence 2101.

Ainsi, selon la présente invention, l'étape de codage 2112 peut élaborer la matrice de codage 2113 par une association de chaque descripteur local avec un ou une pluralité de mots visuels d'un dictionnaire de référence 2101 en fonction d'au moins un critère de similarité, l'association étant en outre réalisée en fonction de la similarité entre chaque descripteur local 2111 et les mots visuels du dictionnaire de référence 2101 associés à au moins un descripteur local 2111 spatialement proche dans le domaine de l'image I de chaque descripteur local 2111 considéré.

Il est par exemple possible d'introduire une fonction d'énergie synthétisant le principe d'association présenté ci-dessus, et pouvant se formuler par la relation suivante :

$$E(Y) = \underbrace{\sum_{p \in P} f_{data}\left(x_p, \hat{B}_p\right)}_{E_p\left(y_p\right)} + \beta \underbrace{\sum_{p \sim q} \mathrm{w}_{\mathrm{p,q}} \, f_{prior}\left(\hat{B}_p, \hat{B}_q\right)}_{E_{p,q}\left(y_p, y_q\right)} \tag{1},$$

où :

- le terme $f_{data}(x_p, \hat{B}_p)$ représente la distance totale entre un descripteur local $x_p$ et une pluralité $m$ choisie de mots visuels de référence, soit $f_{data}\left(x_p, \hat{B}_p\right) = \sum_{i=1}^{m} \left\| x_p - \hat{b}_{p,i} \right\|_2^2$ ;

- $p \sim q$ représente les indices de deux descripteurs locaux spatialement voisins suivant un système de voisinage déterminé, le système de voisinage pouvant par exemple être défini par une grille des 4 plus proches voisins ;

- le terme $f_{prior}(\hat{B}_p, \hat{B}_q)$ représente une somme des distances entre les mots visuels associées aux descripteurs locaux voisins $x_p$ et $x_q$, soit $f_{prior}\left(\hat{B}_p, \hat{B}_q\right) = \sum_{i=1}^{m} \left\| \hat{b}_{p,i} - \hat{b}_{q,i} \right\|$ ;

- le terme $w_{p,q}$ représente un paramètre local dit de régularisation correspondant au niveau de similarité entre les patchs locaux $x_p$ et $x_q$. Ainsi, plus les patchs locaux ont un niveau de similarité élevé, plus l'opération de sélection de la référence est régularisée. Différentes méthodes de mesure de similarité entre des caractéristiques locales peuvent être employées. Il est par exemple possible de recourir à une technique de noyau d'intersection d'histogrammes, connue selon la dénomination anglaise « histogram intersection kernel », particulièrement efficace lorsque les caractéristiques locales sont basées sur des histogrammes. Cette technique consiste à mesurer la similarité entre deux vecteurs histogrammes en sommant les valeurs minimales entre les deux vecteurs en chaque dimension. Un noyau d'intersection d'histogrammes peut être noté $K(.,.)$. Les paramètres de régularisation locale peuvent être établis selon la relation suivante :

$$w_{p,q} = \begin{cases} K\left(x_p, x_q\right) & \text{si} & K\left(x_p, x_q\right) \geq T, \\ 0 & \text{sinon} \end{cases} \tag{2}.$$

Cette forme binaire des paramètres de régularisation permet une régularisation seulement sur des patchs voisins similaires, en-deçà d'une valeur de seuil de similarité notée T. En outre, elle permet de réduire la sensibilité du modèle au paramètre de régularisation global $\beta$. Le paramètre de régularisation global permet d'ajuster l'influence du lissage.

- La relation (1) ci-dessus comprend deux termes principaux notés $E_{data}$ et $E_{prior}$. Le premier terme $E_{data}$ est un terme dit de probabilité, pénalisant l'association de mots visuels éloignés des descripteurs locaux à ces derniers, alors que le second terme $E_{prior}$ est un terme dit « a priori » pénalisant l'association de différents mots visuels à des patchs voisins similaires.

En minimisant la fonction objective définie par la relation (1) ci-dessus, il est alors possible d'obtenir une configuration optimale d'association de descripteurs locaux à des mots visuels du dictionnaire de référence. Cette minimisation est exprimée par la relation suivante :

$$\tilde{Y} = \arg \min E\left(Y \mid X, \hat{B}, W\right) \tag{3}.$$

Les associations retenues constituent la configuration optimale qui associe les vecteurs de référence optimaux aux descripteurs locaux de l'image.

Il est à observer que des cas particuliers de la fonction objective ainsi définie correspondent à des cas en eux-mêmes connus de techniques de codage, notamment :

- dans le cas particulier où le paramètre de régularisation global $\beta$ est nul et où $m$ est égal à 1, la technique d'association utilisée est alors la technique de codage dur ou de codage saillant ;
- dans le cas particulier où le paramètre de régularisation global $\beta$ est nul et où $m$ est supérieur à 1, la technique d'association est alors une technique de type LLC.

La fonction objective ainsi définie est non-convexe pour les formes générales des fonctions de distance $f_{prior}$ et $f_{data}$ introduites ci-dessus. Sa minimisation peut être réalisée de manière appropriée, par exemple à partir de techniques dérivées de techniques en elles-mêmes connues d'optimisation rapide habituellement dédiées à des fonctions d'énergie de type à champs de Markov aléatoires multi-étiquettes d'ordre 1, c'est-à-dire faisant intervenir au maximum des paires interactions entre sites voisins, communément désignées « pairwise multi-label MRF energies ». Plus particulièrement, des algorithmes basés sur une approche par coupes de graphes, plus communément désignée « graph-cuts » suivant la terminologie anglaise, permettent la résolution de nombreux problèmes d'étiquetage dans le domaine de la vision par ordinateur.

Par exemple, l'algorithme désigné sous l'appellation « alpha-expansion » est un algorithme fondé sur une approche par graph-cuts particulièrement approprié pour la présente application. Cet algorithme est un algorithme itératif basé sur les transitions binaires de la configuration souhaitée. A une itération donnée i, chaque site peut garder son étiquette courante ou bien changer d'étiquette, changeant pour une nouvelle étiquette $\alpha^{(i)} \in L$, L étant un ensemble discret d'étiquettes. Ce « mouvement binaire » est réalisé de manière optimale en établissant un graphe approprié dans lequel une coupe minimale / flot maximum sont calculés. Les partitions binaires subissent plusieurs mouvements -ou changements- de partitions jusqu'à ce qu'il soit parvenu à une convergence à un optimum local d'énergie. De la sorte, il est possible d'obtenir des optima locaux de fonctions d'énergie non-convexes, voire un optimum global d'une fonction d'énergie non-convexe, avec une bonne précision. De plus, un tel algorithme présente non seulement l'avantage d'être efficace, mais également celui de pouvoir être appliqué à divers problèmes d'étiquetage, même lorsque les étiquettes ne sont pas ordonnées.

Avantageusement, il est proposé par la présente invention de résoudre le problème d'optimisation posé au moyen d'un nouvel algorithme d'optimisation par approximation étendant le principe de l'alpha-expansion dans deux directions : d'une part de façon à s'appliquer à des étiquettes vectorielles, c'est-à-dire qu'un ensemble fini d'étiquettes est associé à chaque site ; d'autre part pour contraindre chaque site à endosser une étiquette parmi un sous-ensemble approprié d'étiquettes.

Ce nouvel algorithme peut être désigné $\alpha_{knn}$-expansion. Le principe sur lequel cet algorithme d'optimisation est basé consiste à réaliser, à chaque itération, un mouvement d'expansion binaire vers $\alpha = \{\alpha_1, \alpha_2, ..., \alpha_m\} \in \aleph^m$, seulement pour un sous-ensemble de sites $S_\alpha \subset P$, $\alpha$ étant compris dans l'ensemble des indices des k mots visuels les plus proches, soit : $S_\alpha = \{p \in P,$ tel que $\alpha \subset L_p\}$. Ces sites sont désignés ci-après des sites actifs.

A chaque itération de l'algorithme d'optimisation, un mouvement binaire global de tous les sites actifs est réalisé. Les mouvements binaires sont itérés pour un nombre d'étiquettes vectorielles $\{\alpha_1, \alpha_2, ..., \alpha_n\}$ au sein d'un cycle. Si la fonction d'énergie continue de décroître, un nouveau cycle est initié, jusqu'à ce que l'algorithme converge vers un optimum.

Les étapes de l'algorithme sont définies ci-après :

- Les données d'entrée sont : $Y^{(0)}$, la configuration initiale, par exemple correspondant à une association sur la base des m voisins les plus proches telle qu'utilisée dans une approche basée sur une technique de codage de type LLC ; $C_{max}$, une valeur correspondant à un nombre maximal de cycles ; W la matrice des paramètres de régularisation $w_{p,q}$ introduits précédemment ; $\hat{B}$, ensemble introduit précédemment ; X, également introduit précédemment.

- Pour chaque cycle $c \leq C_{max}$, procéder aux étapes suivantes :

  ◦ Sélectionner n vecteurs d'étiquettes $\{\alpha_i\}_{i=1}^n$ parmi l'ensemble des indices des k voisins les plus proches des descripteurs locaux ;

  ◦ Pour chaque itération $i \leq n$, réaliser les sous-étapes suivantes :

  ▪ Réaliser un mouvement d'expansion binaire optimal vers $\alpha_i$ : $Y^{(i)} = \arg\min_Y E(Y|X, \hat{B}, W),$ tel que:

  $$y_p^{(i)} \in \{y_p^{(i-1)}, \alpha_i\}, \forall p \in P ;$$

  ▪ Attribuer à $\tilde{Y}$ la valeur $Y^{(i)}$ ;

  ◦ Si $E(\tilde{Y}) < E(Y^{(c-1)})$, alors attribuer à Y(c) la valeur $\tilde{Y}$, sinon retourner la valeur $\tilde{Y}$, donnée de sortie de l'algorithme.

Afin de réaliser un mouvement d'expansion binaire optimal dans la sous-étape présentée ci-dessus, un graphe

dirigé $G_\alpha = (A_\alpha, \varepsilon_\alpha)$ peut être élaboré, $A_\alpha$ désignant l'ensemble des noeuds relatifs aux sites actifs, $\varepsilon_\alpha$ désignant l'ensemble des bords orientés connectant des noeuds voisins.

Deux noeuds auxiliaires s et t sont ajoutés pour le calcul du flot maximal.

Lorsque le graphe dirigé a ainsi été élaboré, le flot maximal peut être calculé en temps polynomial grâce à la propriété de sous-modularité de la fonction objective proposée, qui est une propriété mathématique de la fonction à minimiser nécessaire pour son optimisation en temps polynomial. En effet, pour les mouvements d'expansion binaire, la contrainte de sous-modularité sur la fonction d'énergie est vérifiée pour tous les termes de données et les termes métriques a priori. C'est le cas pour la fonction objective selon la présente invention formulée par la relation (1) ci-dessus, dans laquelle une métrique est utilisée comme a priori pour le calcul de la distance entre les références associées aux patchs locaux voisins.

La minimisation de cette fonction objective à partir de l'algorithme proposé est rapide, puisque les mouvements d'expansion binaire sont restreints aux sites actifs à chaque itération ; en outre l'utilisation d'un algorithme de flot maximal à temps polynomial tel que décrit ci-dessus présente l'avantage d'être bien adapté à des graphes à structure de grille.

Une fois que la base optimale en terme de localité dans l'espace des caractéristiques et dans le domaine spatial de l'image a été choisie, c'est-à-dire une fois que les vecteurs de base de chaque descripteur ont été choisis d'une façon optimale, selon le modèle établi si dessus en ce qui concerne les étapes de codage et d'agrégation précitées, l'association d'un codage ou « réponse » à chacun des vecteurs de base peut être réalisée au moyen de diverses techniques.

Par exemple, des techniques de codage dur fournissant des réponses dites dures, ou bien des techniques de codage saillant fournissant des réponses saillantes, ou bien des techniques de codage doux fournissant des réponses molles peuvent être utilisées, soit en résolvant le système linéaire ou bien en calculant les probabilités a posteriori d'une caractéristique locale appartenant à l'ensemble des mots visuels choisis.

Pour chaque image, les codes finals sont agrégés pour produire un vecteur unique formant signature. Par exemple, une technique d'agrégation par maximum, communément désignée par la terminologie anglaise « max-pooling » peut être utilisée, cette technique présentant l'avantage de produire de meilleurs résultats qu'une technique d'agrégation par moyenne, tout en étant plus rapide d'un point de vue du temps de calcul.

La figure 4 présente un schéma illustrant de manière synoptique un dispositif de reconnaissance de contexte visuel selon un exemple de réalisation de la présente invention.

Un dispositif de reconnaissance de contexte visuel d'une image peut être mis en oeuvre par des moyens de calcul dédiés, ou bien via des instructions logicielles exécutées par un microprocesseur relié à une mémoire de données. Dans un souci de clarté de l'exposé, l'exemple illustré par la figure 4 décrit de manière non-limitative le dispositif de reconnaissance en termes de modules logiciels, étant considéré que certains modules décrits peuvent être subdivisés en plusieurs modules, ou bien regroupés.

Le dispositif de reconnaissance 40 reçoit en entrée une image I numérisée, par exemple saisie par des moyens de saisie disposés en amont, non représentés sur la figure. Un microprocesseur 400 relié à une mémoire de données 402 permet la mise en oeuvre de modules logiciels dont les instructions logicielles sont stockées dans la mémoire de données 402 ou une mémoire dédiée. Les images, les descripteurs peuvent être stockés dans une mémoire 404 formant une base de données.

Le dispositif de reconnaissance de contexte visuel peut être configuré pour mettre en oeuvre un procédé de reconnaissance selon l'un des modes de réalisation décrits.

La mise en oeuvre d'un procédé de reconnaissance peut être réalisée au moyen d'un programme d'ordinateur comportant des instructions prévues à cet effet.

Il est à noter que la présente invention peut également s'appliquer à la reconnaissance du contexte visuel dans un flux vidéo, un procédé selon un des modes de réalisation décrits pouvant s'appliquer aux images extraites du flux vidéo.

Il est à noter également que la présente invention peut concerner toutes les applications incluant de la reconnaissance de contexte visuel. En particulier, un procédé ou un dispositif selon la présente invention peut permettre :

- de faciliter l'installation d'un réseau de caméras de vidéosurveillance à grande échelle ;
- de reconnaitre automatiquement le contexte d'un véhicule afin d'en tirer les conséquences pour un traitement ultérieur, par exemple une adaptation de la vitesse lorsque le véhicule entre dans une zone urbaine ;
- à un robot compagnon, ou un robot d'assistance de personnes à domicile, de reconnaître la pièce dans laquelle il se trouve ;
- de reconnaître un objet manufacturé, un logo, un lieu ou une ambiance donnée dans une vidéo ou un flux télévisuel.

**Revendications**

**1.** Procédé de reconnaissance d'un contexte visuel dans une image (I) s'inscrivant dans un domaine, comprenant au moins une étape d'extraction de caractéristiques (211) de l'image (I) et comprenant au moins :

- une étape d'extraction d'une pluralité de descripteurs locaux (2111) pour une pluralité de sites de l'image (I),
- une étape de codage (2112) de la pluralité de descripteurs locaux (2111) élaborant une matrice de codage (2113) par une association de chaque descripteur local avec un ou une pluralité de mots visuels d'un dictionnaire de référence (2101) en fonction d'au moins un critère de similarité,
- une étape d'agrégation (2114) formant une signature unique à partir de la matrice de codage (2113),

le procédé étant **caractérisé en ce que** l'association réalisée lors de l'étape de codage (2112) est en outre réalisée au moyen de la minimisation d'une fonction objective définie par une somme d'un premier terme exprimant la somme pour chaque descripteur local donné ($x_p$) de la distance totale dudit descripteur local à des mots visuels du dictionnaire de référence associés audit descripteur local et d'un second terme exprimant pour des descripteurs locaux voisins dans l'image et présentant un niveau de similarité suffisant, la distance entre mots visuels du dictionnaire de référence associés à ces descripteurs locaux.

2. Procédé de reconnaissance selon la revendication 1, **caractérisé en ce que** ledit second terme est pondéré par un paramètre de régularisation global ($\beta$).

3. Procédé de reconnaissance selon la revendication 2, **caractérisé en ce que** ladite fonction objective est définie

$$E(Y) = \underbrace{\sum_{p \in P} f_{data}\left(x_p, \hat{B}_p\right)}_{E_p(y_p)} + \beta \underbrace{\sum_{p \sim q} \mathrm{w}_{p,q} f_{prior}\left(\hat{B}_p, \hat{B}_q\right)}_{E_{p,q}(y_p, y_q)}$$

par la relation suivante : , où le terme $f_{data}(x_p, \hat{B}_p)$ représente la distance totale entre un descripteur local ($x_p$) et une pluralité $m$ de mots visuels du dictionnaire de référence (2101), le terme $f_{prior}(\hat{B}_p, \hat{B}_q)$ représente une somme des distances entre les mots visuels associés aux descripteurs locaux voisins $x_p$ et $x_q$, le terme $p \sim q$ représente les indices de deux patchs spatialement voisins suivant un système de voisinage déterminé, $Y = \left\{ y_p ; y_p \in \aleph^m ; p \in \mathrm{P} \right\}$ représente l'ensemble des indices des mots visuels de référence auxquels les descripteurs locaux $x_p$ sont associés, le terme $\hat{B}_p = \{\hat{b}_{p,i}; i \in \{1;...;m\}\}$ désignant l'ensemble des vecteurs locaux de référence relatifs aux indices dans le vecteur $y_p$.

4. Procédé de reconnaissance selon la revendication 3, **caractérisé en ce que** la minimisation de la fonction objective est opérée par un algorithme d'optimisation.

5. Procédé de reconnaissance selon la revendication 4, **caractérisé en ce que** ledit algorithme d'optimisation se fonde sur une approche de type par coupe de graphes.

6. Procédé de reconnaissance d'un contexte visuel dans un flux vidéo formé par une pluralité d'images, **caractérisé en ce qu'**au moins une image parmi la pluralité d'images fait l'objet d'un procédé de reconnaissance suivant l'une quelconque des revendications précédentes.

7. Système de classification supervisée comprenant au moins une phase d'apprentissage (11) réalisée hors-ligne, et une phase de test (13) réalisée en ligne, la phase d'apprentissage (11) et la phase de test (13) comprenant chacune au moins une étape d'extraction de caractéristiques telle que définie dans un procédé de reconnaissance selon l'une quelconque des revendications précédentes.

8. Dispositif de reconnaissance d'un contexte visuel dans une image (I) comprenant des moyens adaptés pour la mise en oeuvre d'un procédé de reconnaissance selon l'une quelconque des revendications 1 à 6.

9. Programme d'ordinateur comportant des instructions pour l'exécution du procédé de reconnaissance selon l'une quelconque des revendications 1 à 6, lorsque le programme est exécuté par un processeur.

10. Support d'enregistrement lisible par un processeur sur lequel est enregistré un programme comportant des instructions pour l'exécution du procédé de reconnaissance selon l'une quelconque des revendications 1 à 6, lorsque le programme est exécuté par un processeur.

**Patentansprüche**

1. Verfahren zum Erkennen eines visuellen Kontexts in einem Bild (I), das in eine Domäne eingeschrieben ist, das wenigstens einen Schritt des Extrahierens von Charakteristiken (211) des Bildes (I) und wenigstens die folgenden Schritte beinhaltet:

   • einen Schritt des Extrahierens einer Mehrzahl von lokalen Deskriptoren (2111) für eine Mehrzahl von Orten des Bildes (I),
   • einen Schritt des Codierens (2112) der Mehrzahl von lokalen Deskriptoren (2111) unter Ausarbeitung einer Codierungsmatrix (2113) durch eine Assoziation jedes lokalen Deskriptors mit einem oder mehreren visuellen Wörtern eines Referenzwörterbuchs (2101) in Abhängigkeit von wenigstens einem Ähnlichkeitskriterium,
   • einen Aggregationsschritt (2114), der eine eindeutige Signatur auf der Basis der Codierungsmatrix (2113) bildet,

   wobei das Verfahren **dadurch gekennzeichnet ist, dass** die beim Codierungsschritt (2112) realisierte Assoziation ferner mittels der Minimierung einer objektiven Funktion realisiert wird, definiert durch eine Summe eines ersten Terms, der die Summe für jeden gegebenen lokalen Deskriptor ($x_p$) der Gesamtdistanz des lokalen Deskriptors zu visuellen Wörtern des Referenzwörterbuchs ausdrückt, assoziiert mit dem lokalen Deskriptor, und eines zweiten Terms, der die benachbarten lokalen Deskriptoren in dem Bild ausdrückt und ein ausreichendes Ähnlichkeitsniveau präsentiert, wobei die Distanz zwischen visuellen Wörtern des Referenzwörterbuchs mit diesen lokalen Deskriptoren assoziiert ist.

2. Erkennungsverfahren nach Anspruch 1, **dadurch gekennzeichnet, dass** der zweite Term durch einen globalen Ausgleichsparameter (ß) gewichtet wird.

3. Erkennungsverfahren nach Anspruch 2, **dadurch gekennzeichnet, dass** die objektive Funktion für die folgende Relation definiert wird:

$$E(Y) = \underbrace{\sum_{p \in P} f_{data}\left(x_p, \hat{B}_p\right)}_{E_p(y_p)} + \beta \underbrace{\sum_{p \sim q} w_{p,q}\, f_{prior}\left(\hat{B}_p, \hat{B}_q\right)}_{E_{p,q}(y_p, y_q)},$$

   wobei der Term $f_{data}(x_p, \hat{B}_p)$ die Gesamtdistanz zwischen einem lokalen Deskriptor ($x_p$) und einer Mehrzahl m von visuellen Wörtern des Referenzwörterbuchs (2101) repräsentiert, der Term $f_{prior}(\hat{B}_p, \hat{B}_q)$ eine Summe von Distanzen zwischen den mit den benachbarten lokalen Deskriptoren $x_p$ und $x_q$ assoziierten visuellen Wörtern repräsentiert, der Term p~q die Indexe von zwei räumlich benachbarten Patches gemäß einem bestimmten Nachbarschaftssystem repräsentiert, $Y = \left\{ y_p ; y_p \in \aleph^m ; p \in P \right\}$ die Gesamtheit der Indexe von visuellen Referenzwörtern repräsentiert, mit denen die lokalen Deskriptoren $x_p$ assoziiert sind, wobei der Term $\hat{B}_p = \{\hat{b}_{p,i}; i \in \{1;...;m\}\}$ die Gesamtheit der lokalen Referenzvektoren in Bezug auf die Indexe in dem Vektor $y_p$ bezeichnet.

4. Erkennungsverfahren nach Anspruch 3, **dadurch gekennzeichnet, dass** die Minimierung der objektiven Funktion durch einen Optimierungsalgorithmus erfolgt.

5. Erkennungsverfahren nach Anspruch 4, **dadurch gekennzeichnet, dass** sich der Optimierungsalgorithmus auf einem Ansatz des Typs mit Kurvenschnitt begründet.

6. Erkennungsverfahren eines visuellen Kontexts in einem Videofluss, der von einer Mehrzahl von Bildern gebildet wird, **dadurch gekennzeichnet, dass** wenigstens ein Bild unter der Mehrzahl von Bildern Gegenstand eines Erkennungsverfahrens nach einem der vorherigen Ansprüche ist.

7. Überwachtes Klassifizierungssystem, das wenigstens eine offline realisierte Lernphase (11) und eine online realisierte Testphase (13) umfasst, wobei die Lernphase (11) und die Testphase (13) jeweils wenigstens einen Schritt des Extrahierens von Charakteristiken wie in einem Erkennungsverfahren nach einem der vorherigen Ansprüche definiert umfassen.

**8.** Vorrichtung zum Erkennen eines visuellen Kontexts in einem Bild (I), umfassend Mittel, ausgelegt zum Ausführen eines Erkennungsverfahrens nach einem der Ansprüche 1 bis 6.

**9.** Computerprogramm, das Befehle zum Ausführen des Erkennungsverfahrens nach einem der Ansprüche 1 bis 6 umfasst, wenn das Programm von einem Prozessor ausgeführt wird.

**10.** Speichermedium, das für einen Prozessor lesbar ist, auf dem ein Programm gespeichert ist, das Befehle zum Ausführen des Erkennungsverfahrens nach einem der Ansprüche 1 bis 6 umfasst, wenn das Programm von einem Prozessor ausgeführt wird.

**Claims**

**1.** A method for recognizing a visual context in an image (I) forming part of a domain, including at least one step of extracting features (211) from the image (I) and including at least:

> • a step of extracting a plurality of local descriptors (2111) for a plurality of sites of the image (I),
> • a step of coding (2112) the plurality of local descriptors (2111) developing a coding matrix (2113) by associating each local descriptor with one or a plurality of visual words of a reference dictionary (2101) according to at least one similarity criterion,
> • an aggregation step (2114) forming a unique signature from the coding matrix (2113),

the method being **characterised in that** the association performed during the coding step (2112) is furthermore carried out by means of minimizing an objective function defined by a sum of a first term expressing the sum for each given local descriptor ($x_p$) of the total distance of said local descriptor to visual words of the reference dictionary associated with said local descriptor and of a second term expressing for neighbouring local descriptors in the image and displaying a sufficient level of similarity, the distance between visual words of the reference dictionary being associated with these local descriptors.

**2.** The method of recognition according to claim 1, **characterised in that** said second term is weighted by a global regularisation parameter ($\beta$).

**3.** The method of recognition according to claim 2, **characterised in that** said objective function is defined by the following relationship:

$$E(Y) = \underbrace{\sum_{p \in P} f_{data}\left(x_p, \hat{B}_p\right)}_{E_p(y_p)} + \beta \underbrace{\sum_{p \sim q} \mathrm{w}_{p,q} \, f_{prior}\left(\hat{B}_p, \hat{B}_q\right)}_{E_{p,q}(y_p, y_q)} \,,$$

where the term $f_{data}(x_p, \hat{B}_p)$ represents the total distance between a local descriptor ($x_p$) and a plurality m of visual words of the reference dictionary (2101), the term $f_{prior}(\hat{B}_p, \hat{B}_q)$ represents a sum of the distances between the visual words associated with the neighbouring local descriptors $x_p$ and $x_q$, the term p~q represents the indices of two spatially neighbouring patches according to a determined neighbourhood system, $Y = \left\{ y_p \, ; y_p \in \aleph^m ; p \in \mathrm{P} \right\}$ represents the set of indices of the reference visual words with which the local descriptors $x_p$ are associated, the term $\hat{B}_p = \{\hat{b}_{p,i}; i \in \{1;...;m\}\}$ designating the set of reference local vectors relating to the indices in the vector $y_p$.

**4.** The method of recognition according to claim 3, **characterised in that** the minimisation of the objective function is performed by an optimisation algorithm.

**5.** The method of recognition according to claim 4, **characterised in that** said optimisation algorithm is based on a graph cuts type of approach.

6. A method for recognizing a visual context in a video stream formed by a plurality of images, **characterised in that** at least one image among the plurality of images forms the object of a method of recognition according to any one of the preceding claims.

7. A supervised classification system including at least one learning phase (11) performed off-line, and a test phase (13) performed online, the learning phase (11) and the test phase (13) each including at least one feature extraction step as defined in a method of recognition according to any one of the preceding claims.

8. A device for recognising a visual context in an image (I) including means suitable for implementing a method of recognition according to any one of claims 1 to 6.

9. A computer programme comprising instructions for executing the method of recognition according to any one of claims 1 to 6, when the programme is executed by a processor.

10. A recording medium readable by a processor on which a programme is recorded comprising instructions for executing the method of recognition according to any one of claims 1 to 6, when the programme is executed by a processor.

FIG.1

FIG.2

FIG.3A

FIG.3B

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S. LAZEBNIK ; C. SCHMID ; J. PONCE.** Beyond bags of features : Spatial pyramid matching for recognizing natural scene catégories. *précitée*
- **J. SIVIC ; A. ZISSERMAN.** Video google : a text retrieval approach to object matching in videos. *ICCV,* 2003
- **J. VAN GEMERT ; C. VEENMAN ; A. SMEULDERS ; J. GEUSEBROEK.** Visual word ambiguity. *PAMI,* 2009
- **S. GAO ; I. TSANG ; L. CHIA ; P. ZHAO.** Local features are not lonely - Laplacian sparse coding for image classification. *CVPR,* 2011
- **L.LIU ; L. WANG ; X. LIU.** In defense of soft-assignment coding. *CVPR,* 2011
- **J. YANG ; K. YU ; Y. GONG ; T. HUANG.** Linear spatial pyramid matching using sparse coding for image classification. *CVPR,* 2009
- **Y. HUANG ; K. HUANG ; Y. YU ; T. TAN.** Salient coding for image classification. *CVPR,* 2011
- **MIKOLAJCZYK, K. ; SCHMID, C.** A performance evaluation of local descriptors. *Pattern Analysis and Machine Intelligence, IEEE Transactions on,* Octobre 2005, vol. 27 (10), 1615, , 1630